Europäisches Patentamt

European Patent Office

Office européen des brevets

(11) Numéro de publication : **0 454 249 B1**

(12) **FASCICULE DE BREVET EUROPEEN**

(45) Date de publication du fascicule du brevet :
**11.01.95 Bulletin 95/02**

(21) Numéro de dépôt : **91200952.9**

(22) Date de dépôt : **22.04.91**

(51) Int. Cl.⁶ : **H04L 1/22**

(54) **Dispositif de commutation dynamique pour le masquage d'erreurs dans un système à doublement du conduit numérique.**

(30) Priorité : **27.04.90 FR 9005412**

(43) Date de publication de la demande :
**30.10.91 Bulletin 91/44**

(45) Mention de la délivrance du brevet :
**11.01.95 Bulletin 95/02**

(84) Etats contractants désignés :
**DE FR GB**

(56) Documents cités :
**EP-A- 0 249 930**
**DE-A- 3 206 749**
**DE-A- 3 800 977**

(72) Inventeur : **Auclair, Jean-Yves**
**Société Civile S.P.I.D.,**
**156, Boulevard Haussmann**
**F-75008 Paris (FR)**
Inventeur : **Bonnet, Jean-Marc**
**Société Civile S.P.I.D.,**
**156, Boulevard Haussmann**
**F-75008 Paris (FR)**

(74) Mandataire : **Pyronnet, Jacques et al**
**Société Civile S.P.I.D.**
**156, Boulevard Haussmann**
**F-75008 Paris (FR)**

(73) Titulaire : **TRT TELECOMMUNICATIONS**
**RADIOELECTRIQUES ET TELEPHONIQUES**
**88 rue Brillat Savarin**
**F-75013 Paris (FR)**
㉷ **FR**
Titulaire : **Philips Electronics N.V.**
**Groenewoudseweg 1**
**NL-5621 BA Eindhoven (NL)**
㉷ **DE GB**

## Description

L'invention concerne un dispositif de commutation dynamique de signaux sur deux canaux numériques porteurs chacun d'une trame TRA, respectivement TRB, ces trames véhiculant la même information, mais étant affectées par des retards différents, sur des bornes d'entrée respectives BA, BB, dans un système de transmission numérique par blocs d'information, comportant, pour chaque canal, une mémoire de retard variable entre ladite borne d'entrée BA (ou BB) et une borne intermédiaire BA', respectivement BB', constituée par une borne de choix d'un commutateur, et des moyens de commande desdites mémoires de retard variable pour la remise en phase des deux signaux sur lesdites bornes intermédiaires.

Tout système de transmission numérique peut être perturbé par un grand nombre de causes, telles l'imperfection du milieu de transmission (faisceau hertzien par exemple), la présence de bruit sur le canal de transmission, le parasitage radioélectrique ou les pannes. Ces perturbations se traduisent, du point de vue de l'utilisateur, par un taux d'erreurs sur le débit numérique utilisé et par des périodes de coupure. Lorsque le coût du débit numérique n'est pas trop élevé, dans les réseaux de communication terrestres notamment, une solution simple connue pour atténuer cet inconvénient, consiste à dupliquer le signal à transmettre, à le transmettre par deux canaux (conduits) séparés et à choisir le meilleur des deux signaux à la réception. La présente invention se place dans ce contexte de doublement du conduit numérique.

Des systèmes simples, basés sur ce principe, existent dans les réseaux de télécommunication; ils permettent de réduire considérablement le risque de coupure d'une liaison en cas de panne sur l'un des deux conduits et s'apparentent aux systèmes de secours automatique sur des moyens d'émission redondants, mais ne réduisent généralement pas le taux d'erreurs de la liaison choisie. Dans les systèmes de secours simples, la commutation d'un signal de conduit numérique à l'autre se fait sans précautions et provoque en général un paquet d'erreurs par perte d'horloge, de trame etc... Ceci est dû au fait que les deux signaux reçus ont été acheminés séparément, à partir de moyens d'émission et arrivent décalés dans le temps.

En conséquence, un premier problème technique à résoudre pour effectuer correctement la commutation dynamique du signal consiste à remettre en phase les deux signaux reçus. Dans ces conditions, il devient possible de passer d'un signal de trame TRA à un signal de trame TRB aussi souvent qu'il est nécessaire, en fonction des erreurs respectives dans chaque trame, sans risquer de dégrader la transmission, et d'exploiter le maximum de période de temps, sans erreur, de chaque conduit numérique. le problème de la remise en phase des signaux peut être résolu de façon connue du fait d'établir une boucle de contreréaction entre la sortie et l'entrée de commande d'un circuit de retard variable inséré dans un premier canal d'information, un circuit de commande, qui reçoit par ailleurs la même information présente sur un deuxième canal et décalée dans le temps, étant interposé dans la boucle.

Le deuxième problème technique conjoint au premier problème précité, est la détection des erreurs sur les deux canaux numériques et la commande du commutateur en fonction de ces erreurs. Cette détection d'erreurs est effectuée de façon connue après la remise en phase des signaux comme décrit par exemple dans la demande de brevet DE-A- 38 00 977. Dans ce document cependant, on se place dans un cas simple selon lequel il n'y a pas de discrimination entre niveaux d'erreur de gravités différentes et où la probabilité d'apparition d'erreurs sur les bits simultanément dans les deux voies de transmission est négligée, ce qui simplifie notablement la commande du commutateur.

L'invention se fixe comme but de résoudre les deux problèmes techniques précités d'une façon différente et avec une discrimination plus grande des erreurs sur les deux conduits numériques, deux erreurs simultanées et qui peuvent par ailleurs avoir des niveaux de gravité différents étant envisagées. Selon l'invention, la résolution du deuxième problème technique n'est pas subordonnée à la résolution préalable du premier comme indiqué ci-dessus selon l'art antérieur, en ce sens que la comparaison des erreurs est effectuée avant la synchronisation, ce qui offre l'avantage, par rapport à l'art connu, de pouvoir utiliser le même élément de retard pour la fonction de remise en phase des signaux et pour la fonction de temporisation nécessitée par le masquage des erreurs en conséquence de la commutation d'un conduit numérique sur l'autre. Ce but est atteint et les inconvénients de l'art antérieur sont atténués grâce au fait que le dispositif de commutation décrit en préambule comporte en outre :

- des moyens de masquage des défauts entre les bornes d'entrée BA,BB et une borne de commande du commutateur, comportant au moins les organes suivants :
  - un détecteur de défauts à plusieurs niveaux de gravité pour chaque canal,
  - un encodeur de priorité qui compare en permanence les défauts sur les deux canaux en prenant en compte leur niveau de gravité,
  - une bascule RS commandée par l'encodeur de priorité et qui commande ledit commutateur, de façon que le signal de sortie SO du dispositif, à la borne commune dudit commutateur, soit porteur de la trame de qualité la meilleure parmi celles des deux canaux numériques.

La principale originalité du dispositif selon l'invention réside dans le fait que la détection de défauts dans les trames TRA et TRB s'effectue avant la remise en phase entre blocs d'information respectifs. On notera que malgré cette particularité du dispositif, la commutation sur l'une ou l'autre borne de choix du commutateur porteuses des trames TRA', TRB' réalise le masquage d'erreur souhaité, en particulier le masquage d'erreurs non simultanées sur les deux trames, cette hypothèse étant déjà plus restrictive que pour l'art antérieur précité. Par contre, dans le cas d'erreurs décalées d'un intervalle de temps inférieur au temps de retard $\triangle$t d'un signal de trame par rapport à l'autre à l'entrée du dispositif, se pose le problème supplémentaire de devoir retarder la commutation d'un temps au moins égal à la valeur $\triangle$t, correspondant au déphasage, comme expliqué ci-dessous dans la description détaillée.

Pour la résolution de ce problème supplémentaire, un mode de réalisation préféré de l'invention est remarquable en ce que lesdits moyens de masquage des défauts comportent en outre, pour chacun desdits canaux numériques, une mémoire de défauts agencée entre ledit détecteur de défauts et ledit encodeur de priorité et commandée par des moyens de temporisation de fin de défaut pour maintenir l'indication de défaut sur l'encodeur de priorité pendant tout le temps de transit du défaut dans ladite mémoire de retard.

De préférence, les moyens de temporisation de fin de défaut de ce dernier mode de réalisation sont constitués par :
- un détecteur de fin des défauts relié à la sortie du détecteur de défauts dont les sorties incrémentent
- un compteur de date dont le signal de sortie EDATE est fourni à la fois
- à une mémoire de date séparée
- et à une mémoire de date associée à ladite mémoire de retard variable,
- et un comparateur qui compare, pour chaque bloc d'information, les signaux de sorties de la mémoire de date séparée et le signal de sortie SDATE de la mémoire de date associée et qui fournit des signaux de commande séparés à ladite mémoire de défaut.

Il devient ainsi possible d'obtenir une commutation correcte du commutateur, tout en utilisant une mémoire de retard variable unique pour chaque trame TRA, TRB. De préférence, comme décrit ci-dessous, les deux mémoires de retard variable sont constituées elles mêmes sous la forme d'une mémoire double commune à adressage cyclique dont chaque emplacement contient un bloc de la trame TRA et un bloc de la trame TRB ayant même rang dans la trame, l'adressage étant effectué en écriture par deux compteurs d'écriture séparés, calés chacun sur chaque signal de synchronisation et, en lecture, à partir d'un compteur de lecture de chaque emplacement qui fait partie d'un organe de commande piloté par un comparateur de phase.

La description qui suit en regard des dessins annexés, le tout donné à titre d'exemple, fera bien comprendre comment l'invention peut être réalisée.

La figure 1 est un schéma synoptique d'un dispositif de mise en phase de signaux.

La figure 2 est le schéma synoptique général du dispositif de commutation dynamique selon l'invention.

La figure 3 est un diagramme de temps permettant d'expliciter le fonctionnement du dispositif de commutation dynamique de la figure 2.

La figure 4 est le schéma synoptique détaillé d'un mode de réalisation préféré du dispositif de commutation dynamique selon l'invention.

La figure 5 est un diagramme de temps pour expliquer le fonctionnement du dispositif de la figure 2.

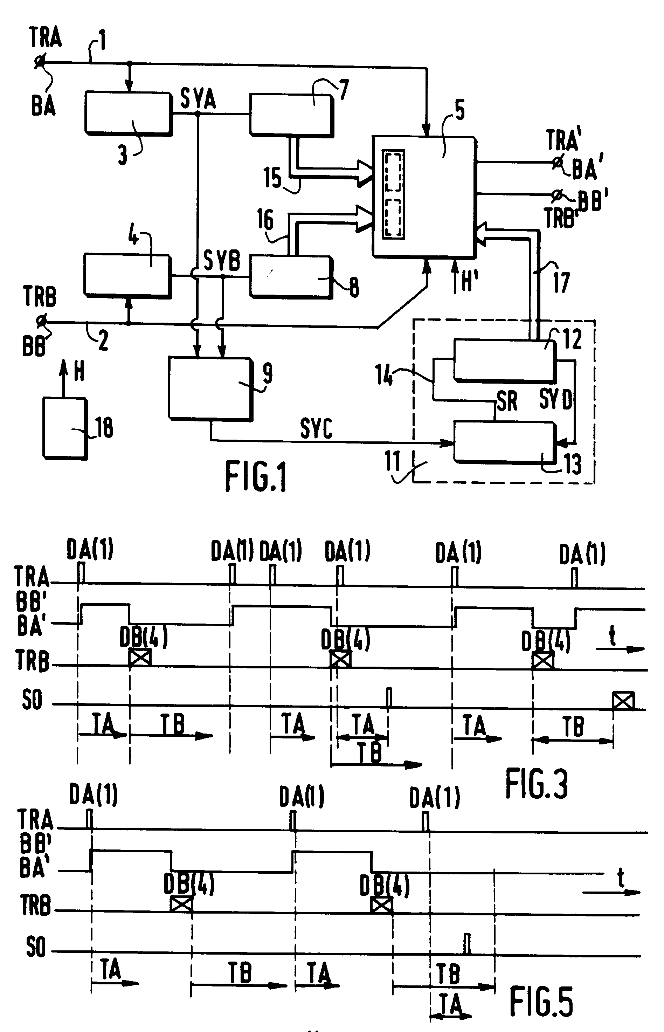

A la figure 1 on a représenté deux canaux (ou conduits) numériques 1 et 2 qui portent à des bornes d'entrée BA, BB respectivement les signaux de trame TRA et TRB porteurs de la même information mais affectés de retards différents. Il s agit par exemple, pour fixer les idées d'un système de transmission téléphonique à répartition dans le temps à 2048 kbits/s, chaque trame comportant 32 voies téléphoniques, à raison d'un échantillon codé sur 8 bits pour chaque voie, soit des trames de 256 bits. Le déphasage maximal envisagé entre les signaux TRA et TRB est grand et peut atteindre plusieurs centaines de trames. Dans l'exemple numérique envisagé, ce déphasage maximal est par exemple égal à 256 trames, soit 65536 bits.

De façon connue, le signal de trame comporte, à intervalles réguliers dans le temps, des bits libres qui peuvent être utilisés en particulier pour acheminer des informations complémentaires. L'un de ces bits est utilisé pour créer un signal de supertrame à basse fréquence dont la période T est au moins égale au double du déphasage maximal exprimé en temps de bit (TBI). Dans la trame à 2048 kbits/s précitée, la fréquence du signal de supertrame est par exemple égale à 15 Hz.

Chaque signal TRA, TRB est fourni d'une part à un moyen de verrouillage trame séparée 3, 4 et à des moyens de retard variable communs 5 constitués par une mémoire double. De préférence, la mémoire 5 est une mémoire circulaire du type RAM statique à double accès.

Chaque moyen de verrouillage trame 3, 4 de conception classique, est conçu pour détecter, dans le signal de trame, le motif de la supertrame à basse fréquence, pour se caler sur ce motif et fournir un signal de synchronisation de trame SYA, SYB sous forme d'un signal carré de période T. Chaque signal SYA, SYB est fourni à un compteur 7, 8 et par ailleurs, ces deux signaux sont aussi fournis à un comparateur de phase 9. Pour compléter le schéma, le comparateur de phase 9 fournit un signal impulsionnel SYC de période T à un organe de commande 11 qui se décompose en un compteur de lecture 12 et un détecteur de coïncidence 13, ce dernier recevant le signal SYC et un signal de synchronisation SYD de période T en provenance du compteur 12 et fournissant, en cas de non coïncidence de phase de ces deux signaux, un signal de rechargement SR, sur un conducteur 14, au compteur 12. Les compteurs 7, 8, respectivement 12, qui sont des compteurs cycliques sont utilisés pour l'adressage en écriture, respectivement en lecture, de la mémoire 5, au moyen de bus d'adresses 15, 16 pour l'écriture, et d'un bus 17 pour la lecture. Un générateur d'horloge 18 fournit un signal d'horloge H à la fréquence des bits de données (de période TBI) à tous les circuits de la figure 1 (la liaison avec ces circuits étant omise intentionnellement pour ne pas surcharger le dessin). Dans la mémoire 5 le signal d'horloge H ou, de préférence, un signal dérivé H' à la fréquence 1/TBL des octets ou des trames qui constituent des blocs de données est utilisé pour l'écriture et la lecture des blocs de données. Chaque compteur d'écriture 7, 8, est calé sur le signal de synchronisation SYA, SYB, son MSB (par exemple le poids 16) étant activé à la fréquence 1/T et son LSB à la fréquence des bits de données (signal H). On peut, pour l'adressage en écriture et en lecture, utiliser tous les bits significatifs des compteurs tels que définis ci-dessus, auquel cas la capacité de la mémoire 5 est égale au nombre de bits de données contenus dans une période T du signal de supertrame. Avantageusement, le MSB n'est pas utilisé pour l'adressage, ce qui permet de réduire la capacité de la mémoire 5 à la moitié de celle indiquée à la phrase précédente. Chaque emplacement 19 de la mémoire est double et contient, juste avant d'être lu, un bloc de TRA et un bloc de TRB, ces deux blocs ayant même rang dans la période définie par des signaux de supertrame qui se correspondent dans TRA et TRB, ces deux blocs étant donc porteurs de la même information aux erreurs de transmission près. La lecture de chaque emplacement mémoire fournit, sur deux bornes de sortie BA', BB', des signaux de trame TRA', TRB', rigoureusement synchrones. A un instant donné to commandé par le signal H', les bus d'adresses 15 et 16 pointent des emplacements pour lesquels la différence de rang est significative du décalage de temps △t à compenser entre trames TRA et TRB. A cet instant to, le bus d'adresses 17 pointe un emplacement dont le rang est lui-même décalé par rapport à l'inscription du signal de données le plus en retard d'un nombre prédéterminé de blocs M x TBL, M étant un nombre entier choisi le plus faible possible en fonction de l'application envisagée. Ce fonctionnement, pour la commande du compteur de lecture 12 par rapport aux compteurs d'écriture 7 et 8 est obtenu au moyen du comparateur de phase 9 et du détecteur de coïncidence 13. Le comparateur de phase réalise une double fonction dont la première consiste à déterminer, parmi les deux signaux de synchronisation de trame SYA et SYB qu'il reçoit, lequel est le plus en retard. A cet effet, il comporte une machine à états (non représentée) qui fournit une valeur logique "1" respectivement "0" ou "0" respectivement "1" selon que SYA est en retard sur SYB ou que SYB est en retard sur SYA. La deuxième fonction est une fonction de sélection qui peut être réalisée simplement au moyen d'un commutateur à deux positions non représenté, commandé par le signal de sortie de la machine à états. Les bornes de choix du commutateur reçoivent chacune un signal déduit du signal SYA, respectivement SYB, sous forme d'un signal impulsionnel de même période (T) par action monostable de courte durée sur le front montant ou, de préférence, sur le front descendant du signal carré qu'il reçoit (SYA ou SYB). Le commutateur fournit alors un signal impulsionnel SYC qui est le signal SYA transformé ou le signal SYB transformé (le plus en retard) selon la valeur logique de sortie de la machine à états.

Dans l'organe de commande de lecture 11 le détecteur de coïncidence 13 reçoit le signal SYC, et le signal SYD en provenance du compteur de lecture 12. Le signal SYD qui est synchronisé sur le cycle de comptage du compteur de lecture avec un retard prédéterminé voisin de la durée MxTBL, a un rapport cyclique faible, très inférieur à 0,5 et se présente sous la forme d'un signal impulsionnel de même période (T) que SYC mais dont la durée d'impulsion est plus large que celle de SYC. Lorsque l'impulsion de SYC se produit pendant la durée d'impulsion de SYD le dispositif de mise en phase fonctionne de façon nominale comme déjà décrit ci-dessus. La différence de largeur d'impulsion est réglée de façon à pouvoir absorber la gigue maximale (de l'ordre de quelques dizaines de bits) qui peut se produire entre le signal d'horloge H et les différents signaux présents dans le dispositif, en particulier entre les signaux SYC et SYD. Si par contre les impulsions de SYC et SYD ne coïncident pas dans le temps comme c'est le cas par exemple lors de la mise sous tension, un signal de rechargement SR sous la forme d'un signal logique "1" ou "0" est transmis à l'entrée de remise à l'état initial (RESET) du compteur 12, ce qui a pour effet de recaler l'impulsion de SYD sur celle de SYC et, simultanément, de rétablir le comptage des adresses de lecture à leur valeur nominale étant entendu que le compteur 12 est conçu, par construction, pour fournir le décalage optimal entre adresses de lecture et d'écriture lorsque les signaux SYC et SYD sont, en substance, en phase. la conception et l'agencement des circuits 12 et 13, et de la mémoire 5 pour réaliser les fonctions simples décrites ci-dessus sont à la portée de l'homme du métier.

Par simple calage relatif préalable entre le cycle de lecture et l'émission du signal SYD il est ainsi possible de régler la valeur de M d'une valeur minimale juste nécessaire à la remise en phase précise des signaux TRA, TRB sous la forme des signaux synchrones TRA', TRB', jusqu'à une valeur qui ajoute un retard fixe TF supplémentaire des signaux TRA', TRB' par rapport aux signaux TRA, TRB et ceci sans rien changer à la structure ni au fonctionnement du dispositif de la figure 1.

Pour le masquage d'erreurs par commutation dynamique il est, dans tous les cas, nécessaire d'introduire le retard fixe TF précité. Ce retard fixe est alors au moins égal à la durée de transmission d'un bloc de données, du fait que ce bloc doit avoir été entièrement reçu avant qu'il soit possible de se prononcer sur sa validité, cette durée étant augmentée du temps TC nécessaire à la détection du défaut sur le bloc erroné et la commande effectuée du commutateur, soit :

$$TF > TBL + TC$$

En pratique, comme le temps TC est voisin de TBL on choisit comme valeur du retard fixe TF la valeur minimale :

$$TF_{min} = 2\,TBL$$

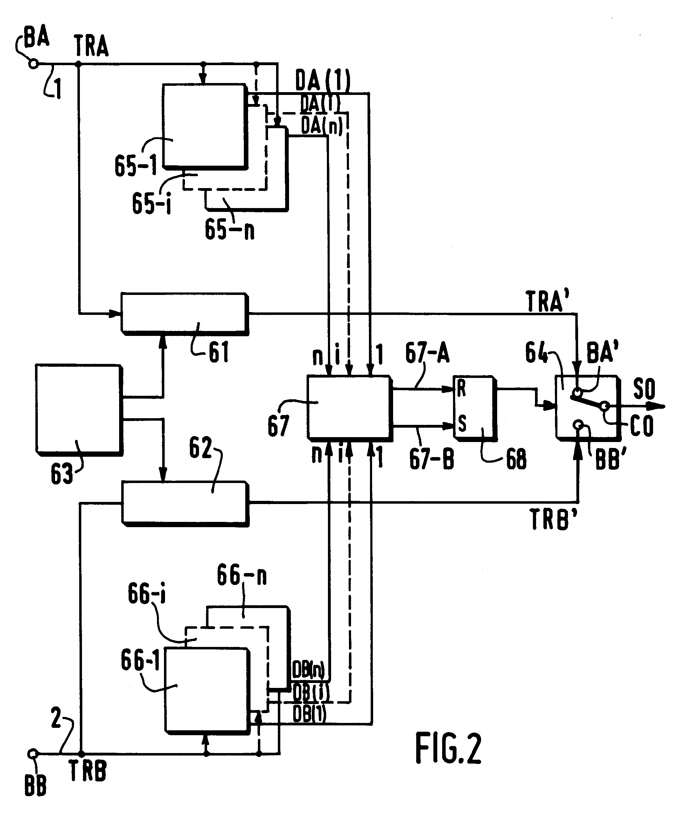

A la figure 2 sont représentées les bornes d'entrée BA et BB porteuses des mêmes signaux de trame d'information numérique TRA et TRB qu'à la figure 1. Le dispositif de mise en phase est symbolisé par deux mémoires de retard variable 61, 62, commandées à partir de moyens de commande de remise en phase 63. Cette remise en phase peut être effectuée par tout moyen connu, par exemple par asservissement de phase des mémoires 61 et 62, de façon à obtenir les signaux TRA' et TRB' en phase sur les bornes BA' et BB' qui sont en l'occurrence les bornes de choix d'un commutateur 64 dont la borne commune CO est le siège du signal de sortie (SO) du dispositif de commutation dynamique selon l'invention. De préférence, le dispositif de mise en phase est celui décrit ci-dessus en référence à la figure 1.

Chaque signal de trame est, à partir de sa borne d'entrée respective, fourni à un détecteur de défauts multiple à plusieurs niveaux de gravité 65-1, ..., 65-i, ..., 65-n (respectivement 66-1, ..., 66-i, ..., 66-n). Chaque détecteur de défauts élémentaire, d'un type connu, reçoit le signal TRA (respectivement TRB) et est conçu pour détecter à l'intérieur de chaque bloc de trame un type d'erreur (de défaut) donné de niveau de gravité donné et pour fournir un signal d'erreur logique, par exemple "1" en cas d'erreur dans le bloc analysé et "0" dans le cas contraire. Ces signaux logiques sont référencés DA(1), ..., DA(i), ..., DA(n), (respectivement DB(1), ..., DB(i), ..., DB(n)), les indices croissant du niveau de gravité le plus faible au niveau de gravité le plus élevé. Le niveau de gravité 1 est celui d'un défaut correspondant à un taux d'erreur et détecté au moyen d'un code CRC, le code CRC4 par exemple ; à un niveau de gravité plus élevé, le niveau i, il est détecté une erreur dans un mot de verrouillage de trame. Le niveau de gravité le plus élevé, n, est celui de la coupure de signal, auquel cas le signal d'erreur en sortie du détecteur d'ordre n se maintient pendant tout le temps de coupure.

Les signaux d'erreur DA(i) (respectivement DB(i)) sont fournis à un encodeur de priorité 67. Cet encodeur de priorité, de construction simple pour l'homme de l'art, agit comme un comparateur partiel par comparaison des signaux d'erreur d'entrée homologues, du niveau de gravité le plus élevé vers le niveau de gravité le plus faible, cette comparaison étant terminée lorsque des valeurs logiques opposées apparaissent pour l'un des niveaux de gravité. En d'autres termes, la comparaison commence au niveau n et se poursuit, d'un niveau de gravité i au niveau juste inférieur i-1 tant que les signaux logiques, comparés deux à deux, sont détectés comme ayant la même valeur logique "0" et "0" (pas d'erreur sur aucun des deux blocs au niveau considéré) ou "1" et "1" (une erreur sur chacun des deux blocs au niveau considéré). L'encodeur de priorité 67 est muni de deux sorties 67-A et 67-B reliées aux entrées respectives R et S d'une bascule R-S 68 dont la sortie Q commande le commutateur 64. Les valeurs logiques qui apparaissent sur les sorties 67-A et 67-B sont par exemple inverses de celles de la première paire de valeurs opposées détectées en entrée lors de la comparaison qui est effectuée en permanence, séquentiellement, à la fréquence d'apparition des blocs de données. Par convention on supposera que l'apparition d'un "1" sur l'entrée R ("0" sur S) provoque le basculement ou le maintien (le forçage) du commutateur sur la borne BA', comme représenté sur la figure 2, et que l'apparition d'un "1" sur l'entrée S ("0" sur R) provoque le forçage du commutateur sur la borne BB'. Dans ces conditions, la table de vérité de l'encodeur de priorité 67 est la suivante, pour deux niveaux de gravité adjacents, i et i-1 :

| NIVEAU DE GRAVITE | | | | COMMUTATION | | |
|---|---|---|---|---|---|---|
| DA(i) | DA(i-1) | DB(i) | DB(i-1) | Entrée R | Entrée S | Commutation |
| 0 | 0 | 0 | 0 | 0 | 0 | Q (i-2) |
| 0 | 1 | 0 | 0 | 0 | 1 | BB' |
| 0 | 0 | 0 | 1 | 1 | 0 | BA' |
| 0 | 1 | 0 | 1 | 0 | 0 | Qo |
| 1 | X | 0 | X | 0 | 1 | BB' |
| 1 | X | 1 | X | 0 | 0 | Qo |
| 0 | X | 1 | X | 1 | 0 | BA' |

dans la table de vérité, le signe X désigne la valeur logique "1" ou "0" indifféremment et Qo désigne l'état précédent du commutateur, et implique que la comparaison ne doit pas être poursuivie à l'étape inférieure. On notera que cette table de vérité ne rend pas compte, en fonctionnement dynamique, de tous les états logiques possibles des éléments 67, 68 et 64 pris ensemble, tout en étant suffisante cependant pour expliquer le fonctionnement de ce sous ensemble et permettre à l'homme de l'art de le réaliser. En particulier, l'indication BB' ou BA' dans la colonne dite commutation n'implique un basculement du commutateur sur cette borne que si ce dernier était positionné sur l'autre borne (BA' ou BB') lors de la comparaison de bloc précédente. Par ailleurs l'indication Q (i-2) implique que la comparaison doit être poursuivie à l'étape i-2.

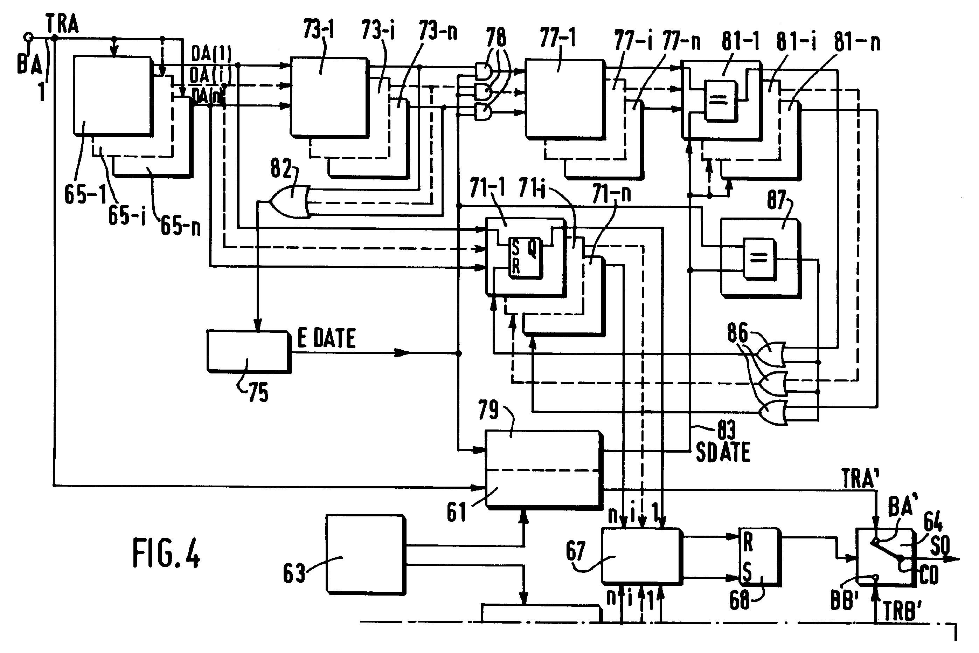

Dans le dispositif de la figure 2, l'ensemble constitué par les détecteurs de défauts à plusieurs niveaux de gravité, l'encodeur de priorité et la bascule RS réalise des moyens de masquage de défauts à plusieurs niveaux de gravité. Ceci permet d'obtenir un signal de trame en sortie SO qui est de meilleure qualité que le signal TRA ou le signal TRB, comme expliqué ci-dessous en référence à la figure 3. Sur cette figure, on a représenté les signaux TRA, TRB, S0 et la position du commutateur 64 (borne BA' ou borne BB'). Etant donnée l'échelle de temps choisie, la largeur d'un bloc est très petite et le retard de commutation par rapport à l'une ou l'autre des trames TRA et TRB inférieur à 2 x TBL peut être considéré comme négligeable. Par contre, le retard du signal de trame le moins en retard (retard TA du signal TRA en l'occurence) qui s'identifie au retard fixe TF dans les mémoires 5, 61 ou 62, a été fixé à une valeur assez élevée de l'ordre de plusieurs dizaines de fois la durée TBL pour rendre la figure plus claire. Le retard TA représente le temps de transit du signal TRA dans la mémoire 61 (ou 5), le retard TB est le temps de transit dans la mémoire 62 (ou 5) et le temps $\triangle t$ représentatif du déphasage entre TRA et TRB est égal à : TB-TA. Toujours à l'effet de donner plus de clarté au dessin, on suppose que c'est toujours le même type d'erreurs qui apparaît dans le signal TRA, respectivement le signal TRB ; ceci ne nuit pas à la généralité de l'exposé étant donné la parfaite symétrie de structure et de fonctionnement du dispositif. Pour le signal TRA il s'agit par exemple d'un taux d'erreur diffus, détecté par un code CRC, connu sous le vocable de : blocs CRC 4 erronés, soit des défauts de type DA(1). Pour le signal TRB, les erreurs sont plus graves, moins fréquentes, la transmission étant alors perturbée par des pertes de verrouillage de trame. Ce deuxième type d'erreur est désigné par exemple par DB(4). On constate que, dans la grande majorité des cas, les défauts sur l'un ou l'autre conduit numérique sont masqués, dans le signal SO, en vertu de ce qui a été décrit ci-dessus. En cas d'apparition de défaut simultané sur les deux conduits, comme représenté au centre de la figure 3, c'est le défaut le plus grave qui est masqué. Il existe cependant un cas indésirable représenté sur la droite de la figure, pour lequel étant donnés deux défauts non simultanés mais assez rapprochés dans le temps, c'est le défaut le plus grave qui est transmis. Ceci provient du fait que le défaut de type DA(1) provoque la commutation sur la borne BB' juste avant que le défaut de type DB(4) ne sorte de la mémoire 62 (ou 5) et, plus généralement, ceci provient de l'existence du temps de transit TB. Un deuxième mode de réalisation du dispositif de commutation dynamique représenté à la figure 2 et qui constitue un perfectionnement à ce dernier du fait d'éliminer le cas indésirable précité, est décrit ci-dessous en référence aux figures 4 et 5.

Sur la figure 4 sont représentés la plupart des éléments de la figure 2 avec les mêmes références. Le dispositif de la figure 4 effectue une temporisation de fin des défauts. A cet effet, les moyens de masquage de défauts comportent en outre une mémoire de défauts associée à chaque détecteur de défauts. Sur la figure 4, on a représenté, en plus de la partie de traitement commune aux signaux TRA et TRB, que la partie de traitement du signal TRA, la partie relative au signal TRB, totalement symétrique de cette dernière au point de vue structure et fonctionnement n'étant pas représentée. La mémoire de défauts pour le signal TRA est constituée par des bascules R-S, 71-1, ..., 71-i, ..., 71-n qui reçoivent chacune sur leur entrée S (SET) les signaux de sortie respectifs DA(1), ..., DA(i), ..., DA(n) des détecteurs de défauts 65-1, ..., 65i, ..., 65(n) et dont les sorties (sorties Q des bascules R-S) sont reliées aux entrées de même rang de l'encodeur de priorité 67. La mémoire de défauts reçoit un signal de commande, sur chaque entrée R (RESET) de bascule R-S en provenance de moyens de temporisation de fins de défauts. Ces moyens de temporisation sont constitués pour l'essentiel par :

- un détecteur de fin de défauts 73-1, ..., 73-i, ..., 73-n qui reçoit les signaux d'erreur logique DA(1), ..., DA(i), ..., DA(n)
- un compteur de date 75
- une mémoire de date séparée 77-1, ..., 77-i, ..., 77-n, dont les entrées sont reliées, chacune, par l'intermédiaire de portes logiques ET 78 aux entrées de la mémoire de date séparée, une mémoire de date associée 79, jumelée avec la mémoire de retard variable 61 (respectivement 5) et
- un comparateur 81-1, ..., 81-i, ..., 81-n, qui reçoit sur des premières entrées les signaux de sortie de la mémoire de date séparée 77. Le dispositif fonctionne séquentiellement, à la fréquence de transmission des blocs de données 1/TBL.

Les signaux de sortie du détecteur de fin de défauts incrémentent, par l'intermédiaire d'un circuit-porte OU 82, le compteur de date 75, d'une unité, à l'instant TE qui marque la fin d'un défaut DA(j), quel que soit son niveau de gravité j, cet instant pouvant survenir plusieurs temps de bloc TBL après l'apparition du défaut considéré. L'état du compteur après incrémentation, référencé EDATE en sortie du compteur rend compte de chaque date TE de fin de défaut.

Le signal EDATE est fourni en permanence à la mémoire de date séparée 77 par l'intermédiaire de l'une des portes logiques 78. Chaque date de fin de défaut est ainsi mémorisée par emmagasinage de l'état du compteur dans la partie j de la mémoire de date séparée affectée au défaut DA(j) considéré, à chaque instant TE. Simultanément, le même état de comptage (la même date) est mémorisé dans la mémoire de date associée (79), dans le même emplacement mémoire que celui du bloc d'information coïncidant avec la fin du défaut DA(j) et dans les emplacements suivants. Pendant tout le temps de transit TA dans la mémoire 79, l'indication du défaut DA(j) est maintenue, sur l'entrée j de l'encodeur de priorité, c'est-à-dire tant que la bascule R-S 71-j de la mémoire de défauts n'est pas remise à l'état initial. A chaque lecture de bloc engendrant la trame TRA' sur la borne BA', la date associée à ce bloc, SDATE, est lue simultanément et fournie, par un conducteur 83, à une deuxième entrée des comparateurs 81-1, ..., 81-i, ..., 81-n. En cas d'égalité des nombres en entrée de chacun des comparateurs, le comparateur 81-j, par exemple, un signal logique de remise à zéro est fourni, par l'intermédiaire d'un circuit-porte ou 86 à l'entrée de remise à zéro (RESET) de la bascule R-S 71-j de la mémoire de défauts. Cette action sur la bascule 71-j provoque le passage de l'état "1" à l'état "0" sur l'entrée j de l'encodeur de priorité et marque donc la fin de la temporisation de la fin du défaut DA(j).

Avec le dispositif de la figure 4 chaque entrée de l'encodeur de priorité est active depuis la détection d'un défaut, pendant toute la durée du défaut augmentée du temps de transit des données dans la mémoire de retard variable du signal de trame en cause. On obtient le fonctionnement décrit ci-dessous en référence à la figure 5 où est adopté le même mode de représentation qu'à la figure 3.

Pour les trois premiers défauts représentés à la partie gauche de la figure, le basculement du commutateur d'une borne de choix à l'autre, s'effectue comme à la figure 3. Il s'agit de défauts DA(1), DB(4), DA(1) suffisamment éloignés dans le temps pour qu'il n'y ait pas d'interférence entre les deux signaux de trame TRA et TRB, en ce qui concerne leur action sur le commutateur 64. On notera cependant qu'à la figure 5, les temps TA et TB sont comptés à partir de la fin des défauts et non de leur début. Le cas de défauts simultané, non représenté, est aussi résolu comme à la figure 3. Par contre, le cas indésirable à droite sur la figure 3, ne se produit plus, comme représenté à droite sur la figure 5 : le défaut DB(4), qui provoque le basculement du commutateur de BB' sur BA' très rapidement, soit après un temps compris entre 1 et 2 temps de bloc, provoque aussi le maintien du commutateur sur BA' pendant la durée TB, jusqu' à ce que le dernier bloc erroné de DB(4) apparaisse sur la borne BB'. Pendant cette durée TB, l'erreur DA(1) dans le signal TRA est transmise, après la durée TA, dans le signal de sortie SO. A partir de la fin de la durée TB et en l'absence d'erreur dans le signal TRA, le contact du commutateur demeure sur la borne BA'. On obtient ainsi que ce soient toujours les défauts les plus graves qui soient masqués en cas de conflit sur l'action du commutateur provoquée par les erreurs de niveaux de gravité différents qui apparaissent dans les signaux de trame TRA et TRB.

Pour obtenir un bon fonctionnement du circuit de la figure 4, deux dispositions supplémentaires peuvent être prises.

En premier lieu, une réinitialisation automatique du dispositif est réalisée de préférence par un dispositif de chien-de-garde 87, constitué par un comparateur, identique au comparateur 81-i, qui reçoit et compare les signaux EDATE et les signaux SDATE et fournit, en cas d'égalité, par l'intermédiaire des portes OU 86, un signal de commande de remise à zéro commun aux bascules R-S de la mémoire de défauts 71-1, ..., 71-i, ..., 71-n. Grâce au dispositif 87, à la mise sous tension, un cycle de fonctionnement pendant lequel le compteur de date n'est pas incrémenté, permet de remettre à zéro la mémoire de défauts, ce qui est nécessaire à titre d'initialisation du dispositif.

Une autre disposition est de proportionner la capacité de chaque compteur de date cyclique tel que 75 au nombre maximal d'erreurs susceptibles de se produire pendant la durée TA (respectivement TB). Cette capacité doit être assez grande pour que deux dates identiques ne puissent pas coexister dans l'une ou l'autre mémoire de date associée, ce qui entrainerait une ambiguïté lors de la comparaison en 81-1, ..., 81-i, ..., 81-n, étant donné que deux défauts distincts ne peuvent pas se terminer en même temps dans la même trame.

La réalisation des circuits décrits ci-dessus est à la portée de l'homme de métier, ces circuits étant soit connus, soit de conception simple. De préférence le dispositif selon l'invention est réalisé sous la forme de circuits intégrés. Notamment, pour le mode de réalisation qui unifie le plus les mémoires de données (mémoire 5 de la figure 1), il est élaboré un circuit intégré pour la réalisation de la mémoire 5 et des deux mémoires de date associées et un circuit intégré pour les autres éléments du dispositif, qu'il s'agisse du mode de réalisation de la figure 2 ou de celui de la figure 4.

## Revendications

1.  Dispositif de commutation dynamique de signaux sur deux canaux numériques porteurs chacun d'une trame TRA, respectivement TRB, ces trames véhiculant la même information, mais étant affectées par des retards différents, sur des bornes d'entrée respectives BA, BB, dans un système de transmission numérique par blocs d'information, comportant, pour chaque canal, une mémoire de retard variable (61,62) entre ladite borne d'entrée BA (ou BB) et une borne intermédiaire BA', respectivement BB', constituée par une borne de choix d'un commutateur (64), et des moyens de commande (63) desdites mémoires de retard variable pour la remise en phase des deux signaux sur lesdites bornes intermédiaires, caractérisé en ce que ledit dispositif dans lequel sont en outre agencés des moyens de masquage des défauts entre les bornes d'entrée BA, BB et une borne de commande du commutateur, comporte au moins les organes suivants :
    - un détecteur de défauts à plusieurs niveaux de gravité (65i,66i) pour chaque canal,
    - un encodeur de priorité (67) qui compare en permanence les défauts sur les deux canaux en prenant en compte leur niveau de gravité,
    - une bascule RS (68) commandée par l'encodeur de priorité et qui commande ledit commutateur, de façon que le signal de sortie SO du dispositif, à la borne commune (CO) dudit commutateur, soit porteur de la trame de qualité la meilleure parmi celles des deux canaux numériques.

2.  Dispositif de commutation dynamique selon la revendication 1 caractérisé en ce que lesdits moyens de masquage des défauts comportent en outre, pour chacun desdits canaux numériques, une mémoire de défauts (71i) agencée entre ledit détecteur de défauts et ledit encodeur de priorité et commandée par des moyens de temporisation de fin de défaut pour maintenir l'indication de défaut sur l'encodeur de priorité pendant tout le temps de transit du défaut dans ladite mémoire de retard.

3.  Dispositif de commutation dynamique selon la revendication 2 caractérisé en ce que lesdits moyens de temporisation de fin de défaut sont constitués par :
    - un détecteur de fin des défauts (73i) relié à la sortie du détecteur de défauts dont les sorties incrémentent,
    - un compteur de date (75) dont le signal de sortie EDATE est fourni à la fois,
    - à une mémoire de date séparée (77i),
    - et à une mémoire de date (79) associée à ladite mémoire de retard,
    - et un comparateur (81i) qui compare, pour chaque bloc d'information, les signaux de sorties de la mémoire de date séparée et le signal de sortie SDATE de la mémoire de date associée et qui fournit des signaux de commande séparés à ladite mémoire de défaut (71i).

4.  Dispositif de commutation dynamique selon la revendication 3 caractérisé en ce que lesdits moyens de temporisation de fin de défaut comportent en outre un dispositif de chien-de-garde (87) qui reçoit le signal EDATE et le signal SDATE et qui fournit un signal de commande commun à ladite mémoire de défaut.

**Patentansprüche**

1. Dynamische Schaltungsanordnung für Signale auf zwei digitalen Übertragungskanälen für jeweils ein Datenpaket TRA bzw. TRB in einem digitalen Informationsblock-Übertragungssystem, wobei diese Pakete dieselbe Information übertragen, aber unterschiedliche Verzögerungen an den jeweiligen Eingängen BA, BB aufweisen und wobei die Anordnung pro Kanal einen einstellbaren Verzögerungsspeicher (61, 62) zwischen dem Eingang BA (oder BB) und einem Zwischenanschluß BA' bzw. BB' umfaßt, bestehend aus einem Umschaltanschluß (64) und Steuermitteln (63) für die einstellbaren Verzögerungsspeicher zur Resynchronisierung der zwei Signale an den Zwischenanschlüssen, dadurch gekennzeichnet, daß diese Anordnung, in der außerdem Fehlermaskierungsmittel zwischen den Eingängen BA, BB und einem Schaltersteueranschluß angeordnet sind, mindestens folgende Elemente umfaßt:
   - einen Detektor für Fehler unterschiedlicher Schweregrade (65i, 66i) pro Kanal;
   - einen Prioritätsverschlüßler (67), der ständig die Fehler in beiden Kanälen unter Berücksichtigung ihres Schweregrades vergleicht,
   - einen Flipflop RS (68), der vom Prioritätsverschlüßler gesteuert wird und den Schalter so steuert, daß das Ausgangssignal SO der Anordnung am gemeinsamen Ausgang (CO) des Schalters das Datenpaket mit der besseren Qualität der beiden digitalen Kanäle weiterleitet.

2. Dynamische Schaltungsanordnung nach Anspruch 1, dadurch gekennzeichnet, daß diese Fehlermaskierungsmittel außerdem für jeden der digitalen Kanäle einen Fehlerspeicher (71i) umfassen, der zwischen dem Fehlerdetektor und dem Prioritätsverschlüßler angeordnet ist und von Mitteln zur zeitlichen Verzögerung des Fehlerendes gesteuert wird, um die Fehleranzeige am Prioritätsverschlüßler über die gesamte Dauer des Durchlaufs des Fehlers durch den Verzögerungsspeicher aufrechtzuerhalten.

3. Dynamische Schaltungsanordnung nach Anspruch 2, dadurch gekennzeichnet, daß die Fehlerende-Verzögerungsmittel aus:
   - einem Fehlerendedetektor (73i), der mit dem Ausgang des Fehlerdetektors mit inkrementierenden Ausgängen verbunden ist,
   - einem Datumzähler (75), dessen Ausgangssignal EDATE gleichzeitig
   - einem separaten Datumspeicher (77i) und
   - einem dem Verzögerungsspeicher zugeordneten Datumspeicher (79) zugeführt wird, und
   - einem Komparator (81i), der für jeden Informationsblock die Ausgangssignale des separaten Datumspeichers und das Ausgangssignal SDATE des zugeordneten Datumspeichers vergleicht und dem Fehlerspeicher (71i) separate Steuersignale zuführt,

   bestehen.

4. Dynamische Schaltungsanordnung nach Anspruch 3, dadurch gekennzeichnet, daß die Fehlerende-Verzögerungsmittel außerdem eine Überwachungseinrichtung (87) umfassen, die das Signal EDATE und das Signal SDATE empfängt und an den Fehlerspeicher ein gemeinsames Steuersignal anlegt.

**Claims**

1. Dynamic switching arrangement for switching signals over two digital channels carrying each a frame TRA or TRB, these frames conveying the same information, but being affected by different delays, to respective input terminals BA, BB in a digital information block transmission system, comprising for each channel a variable delay memory (61; 62) between said input terminal BA (or BB) and an intermediate terminal BA', BB' respectively, constituted by a selection terminal of a switch (64), and control means (63) of said variable delay memories for bringing the two signals on said intermediate terminals in phase again, characterized in that the arrangement comprises:
   - masking means for masking errors between the input terminals BA, BB and a control terminal of the switch, comprising at least the following elements:
     - an error detector having various levels of gravity ($65_i$; $66_i$) for each channel,
     - a priority encoder (67) which permanently compares the errors of the two channels while considering their level of gravity,
     - an R-S flip-flop (68) controlled by the priority encoder and which controls said switch so that the output signal SO of the arrangement at the common terminal (co) of said switch carries the frame having the better quality of the two digital channels.

2. Dynamic switching arrangement as claimed in Claim 1, characterized in that said error masking means further comprises for each of said digital channels, an error memory ($71_i$) inserted between said error detector and said priority encoder and controlled by a delay means which indicates the end of the error so as to maintain the error indication on the priority encoder during the complete transit time of the error in said delay memory.

3. Dynamic switching arrangement as claimed in Claim 2, characterized in that said error end delay means comprises:
   - an error-end detector ($73_i$) connected to the output of the error detector whose outputs increment,
   - a date counter (75) whose output signal EDATE is at once supplied to:
     - a separate date memory (77), and
     - a date memory (79) associated to said variable delay memory,
   - and a comparator ($81_i$), which compares for each information block the output signals of the separate date memory and the output signal SDATE of the associated date memory and which supplies separate control signals to said error memory ($71_i$).

4. Dynamic switching arrangement as claimed in Claim 3, characterized in that said error end delay means further includes a stand-by circuit (87) which receives the signal EDATE and the signal SDATE and which applies a common control signal to said error memory.

FIG.1

FIG.3

FIG.5

FIG.2

FIG.4